# FASCICULE DE BREVET EUROPEEN

(11) **EP 2 451 664 B1**
(45) Date de publication et mention de la délivrance du brevet: **19.11.2014**
(21) Numéro de dépôt: 10734514.2
(22) Date de dépôt: 18.06.2010
(51) Int. Cl.: B60J 5/04

(54) **STRUCTURE DE PORTE DE VEHICULE**
TÜRAUFBAU EINES FAHRZEUGS
DOOR STRUCTURE FOR A MOTOR VEHICLE

(30) Priorité: 09.07.2009 FR 0954766
(43) Date de publication de la demande: 16.05.2012
(73) Titulaire: Peugeot Citroën Automobiles SA, 78140 Vélizy-Villacoublay (FR)
(72) Inventeur: GUILLY, Xavier, F-91940 Les Ulis (FR); GRUNCHEC, Gregory, F-92130 Issy Les Moulineaux (FR)
(74) Mandataire: Fernandez, Francis Lionel
(86) Numéro de dépôt international: PCT/FR2010/051235
(87) Numéro de publication internationale: WO 2011/004094

(56) Documents cités:
- EP-A- 1 586 495
- DE-U1-202004 008 481

## Description

L'invention se rapporte aux structures de porte de véhicule en prévision d'éventuels chocs.

Plus généralement, l'invention se rapporte, également, au domaine de la protection des individus contre les chocs.

Les constructeurs automobiles ont pour préoccupation d'améliorer la sécurité des passagers en cas de choc avec un véhicule et notamment en cas de choc frontal.

Dans ce contexte, de nombreux agencements de structures de porte de véhicules ont été envisagés pour répondre au choc frontal.

Une structure de porte de véhicule classique comprend une ouverture de porte latérale délimitée par des montants, ou pieds, entre lesquels la porte est montée.

Il est connu de prévoir sur la porte et, en particulier la porte avant, une barre de renfort pour renforcer mécaniquement cette dernière.

En effet, en cas de choc frontal sur le véhicule, des efforts sont créés qui tendent à rapprocher les deux montants supportant la porte.

La barre de renfort, s'étendant entre les deux montants, est destinée à résister à ces efforts et à limiter la déformation de la porte lors du choc.

Pour que la barre remplisse son rôle de renfort, il faut éviter que la porte ne s'ouvre lors du choc frontal.

Pour cela, il est connu d'associer la barre de renfort à des cales agencées dans l'espace libre défini entre le bord arrière de la porte et le montant associé, la porte étant fermée.

Ces cales sont destinées à réduire les jeux entre la porte et le montant associé.

Un exemple d'un tel véhicule est divulgué dans DE 202004008481 U1.

En maîtrisant le déplacement relatif entre la porte et le montant associé lors du choc frontal, on contrôle mieux leur degré de déformation, ce qui contribue à prévenir l'ouverture de la porte lors du choc.

De façon conventionnelle, lors du montage de la structure de porte, ces cales sont fixées par des moyens adaptés sur le panneau intérieur dit doublure de la porte au niveau du bord arrière de cette dernière.

Pour une question d'esthétique, l'ensemble est ensuite recouvert par un élément d'habillage de forme complémentaire à celle de la doublure de porte.

Cette solution est longue et fastidieuse à mettre en oeuvre sur une ligne de production.

En effet, le montage de la structure de porte est complexe de part la multiplicité des pièces qui la constituent et la nécessité de place et de temps dédié sur la ligne de montage pour installer les cales.

La productivité de la ligne de production s'en trouve affectée et les difficultés de maintenance sont multipliées.

La présente invention vise à remédier à ces inconvénients.

Un but de la présente invention est de proposer une solution alternative aux structures de porte de véhicule connues face à la problématique du choc frontal.

Il est également désirable de proposer une structure de porte de véhicule dont le montage est simple et rapide à mettre en oeuvre.

Un autre but de la présente invention est de proposer une structure de porte de véhicule dont les coûts de production, de stockage et d'approvisionnement sont réduits.

A cet effet, on prévoit selon l'invention un élément d'habillage destiné à recouvrir un ouvrant ou un montant délimitant une ouverture latérale d'une structure de porte de véhicule remarquable en ce qu'il comprend une cale.

Grâce à la présente invention, la mise en place d'une cale sur une structure de porte de véhicule est obtenue lors du montage et de la fixation de l'élément d'habillage en place sur l'ouvrant ou sur le montant associé de la structure de porte.

Le nombre de pièces constitutives de la structure de porte étant réduites, les problèmes précités liés au montage spécifique de la cale sur l'ouvrant le long de la ligne de production du véhicule sont résolus.

Selon des modes particuliers de réalisation de l'invention, l'élément d'habillage peut comprendre une ou plusieurs des caractéristiques suivantes, prises isolément ou en combinaison techniquement possibles :
- la cale peut être rapportée ou venue de moulage avec l'élément d'habillage ;
- la cale est fixée par vissage, encliquetage ou collage sur l'élément d'habillage ;
- la cale est une pièce dans laquelle est ménagé un réseau de nervures de renfort.

On prévoit également, selon l'invention, un véhicule comprenant une ouverture latérale délimitée par un premier et un second montant, un ouvrant mobile entre une position d'ouverture et une position de fermeture de ladite ouverture latérale, l'ouvrant étant articulé sur le premier montant et verrouillable sur le second montant en position fermée, un élément d'habillage tel que précité rapporté sur l'un ou sur l'autre de l'ouvrant ou du second montant pour le recouvrir, ladite cale étant disposée dans l'espace libre défini entre l'ouvrant et le second montant lorsque ledit ouvrant est fermé.

Selon des modes particuliers de réalisation de l'invention, le véhicule peut comprendre une ou plusieurs des caractéristiques suivantes, prises isolément ou en combinaison techniquement possibles :
- l'élément d'habillage présente une forme complémentaire à celle d'une doublure intérieure de porte latérale ;
- l'élément d'habillage présente une forme complémentaire à celle d'un pied milieu délimitant l'ouverture latérale ;
- l'élément d'habillage comprend un profilé comprenant une branche s'étendant dans ledit espace libre, ladite branche étant adaptée pour former support à la cale ;
- le véhicule comprend, en outre, une barre de renfort s'étendant le long de l'ouvrant, ladite cale étant disposée dans l'espace libre défini entre l'ouvrant et le second montant au niveau de ladite barre de renfort.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :
- la figure 1 représente une structure avant gauche de véhicule selon un mode de réalisation de la présente invention, vue de l'intérieur de l'habitacle ;
- les figures 2a et 2b représentent des vues en perspective, respectivement, d'un élément d'habillage et d'une cale installés sur une porte avant droite symétrique de la porte représentée à la figure 1 ;
- la figure 3 représente une vue en coupe d'une partie de la structure de avant gauche de véhicule de la figure 1, selon le plan P visible sur la figure 1.

Sur l'ensemble des figures, on définit un système d'axes X, Y, Z attaché au véhicule. De façon conventionnelle, l'axe X représente l'axe longitudinal de roulement du véhicule, l'axe Y représente l'axe transversal du véhicule, et l'axe Z représente l'axe vertical du véhicule.

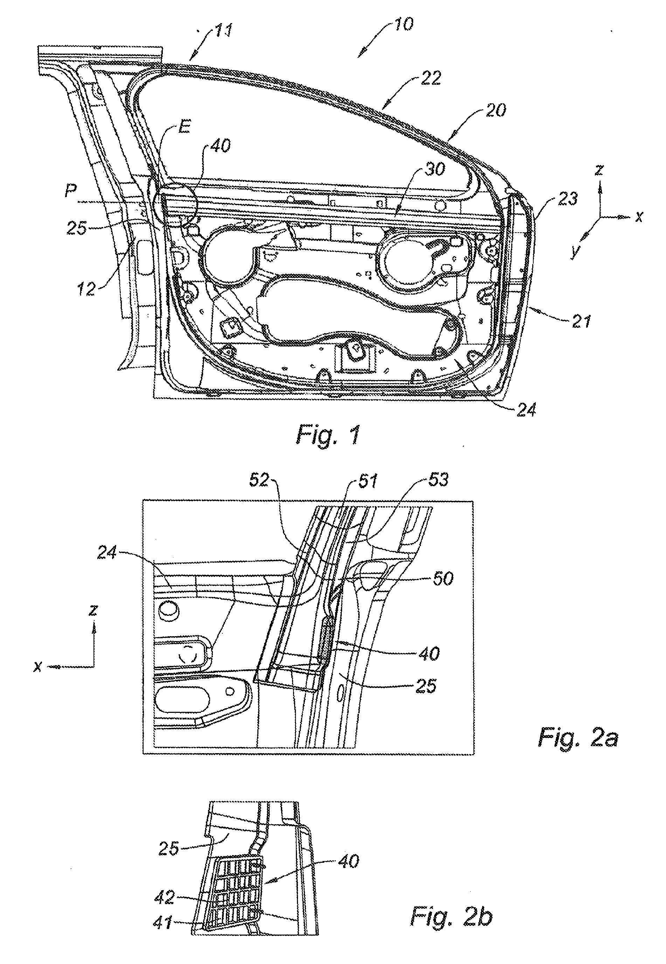

On a représenté, sur la figure 1, une structure latérale avant gauche d'un véhicule automobile, désignée par la référence générale 10.

Cette structure 10 comprend au moins une ouverture latérale d'accès 11 délimitée par un montant avant (non illustré) et un montant arrière 12 s'étendant sensiblement selon l'axe Z.

L'ouverture latérale d'accès 11 est destinée à être fermée par un ouvrant 20 monté articulé autour d'un axe porté par le montant avant et susceptible d'être verrouillée sur le montant arrière 12 par des moyens de fermeture appropriés.

L'ouvrant 20 est mobile entre une position d'ouverture et une position de fermeture de l'ouverture latérale d'accès 11.

Dans l'exemple illustré sur la figure 1, l'ouvrant 20 correspond à la porte latérale avant du véhicule et le montant arrière 12 correspond, par conséquent, au pied milieu de la structure de caisse du véhicule.

Ainsi que le montre la figure 1, la porte 20 comporte un caisson 21 inférieur prolongé suivant l'axe Z par une partie vitrée 22 supérieure.

Le caisson 21 est formé à partir d'un panneau extérieur de carrosserie 23 du côté extérieur de la porte 20 et d'une doublure intérieure 24 de porte fixés l'un à l'autre.

Le bord périphérique libre du caisson 21 par lequel le panneau extérieur 23 et la doublure intérieure 24 sont reliés du coté de la fermeture de la porte 20 est désigné par la référence 25.

Ce bord périphérique libre 25 est sensiblement parallèle au montant arrière 12.

Par ailleurs, une barre de renfort 30 est fixée sur la doublure intérieure 24 au voisinage de la partie vitrée 22 de la porte 20.

Cette barre de renfort 30 s'étend suivant l'axe X entre le bord avant et le bord périphérique libre 25 du caisson 21.

Cette barre de renfort 30, présentant une rigidité plus importante que la porte 20, est destinée à s'entretoiser entre le montant avant et le montant arrière 12 de la structure de porte 10 afin de limiter l'écrasement de la porte 20 en cas de choc éventuel contre un obstacle selon les directions X et Y.

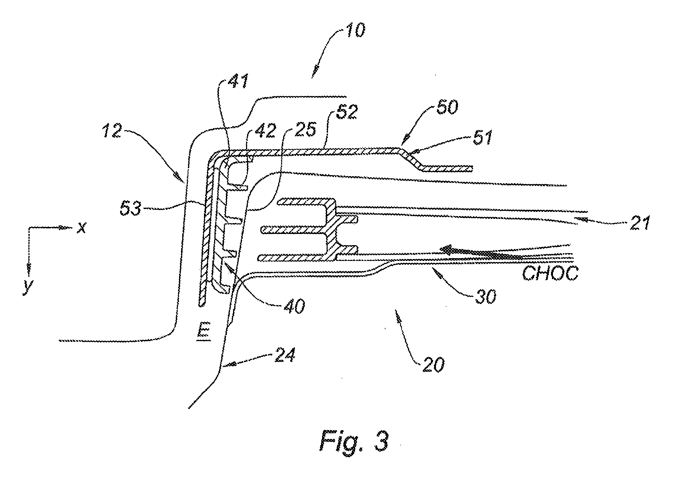

Tel qu'illustré sur les figures 1 et 3, lorsque la porte 20 est fermée, un espace libre E est défini entre la face avant du pied milieu 12 et le bord périphérique libre 25 de la porte 20 le long de la direction X.

Une cale 40 destinée à limiter les jeux entre la porte 20 et la face avant du pied milieu 12 est agencée dans cet espace libre E au niveau de la barre de renfort 30.

Cette pièce 40 s'apparente à une entretoise rigide apte à limiter le recul de la porte 20 lors d'un choc frontal du véhicule et à résister à l'écrasement de cette dernière à une déformation maximale déterminée selon la direction X.

En référence aux figures 2a et 3, selon l'invention, un élément d'habillage 50 rapporté sur l'un ou sur l'autre de la porte 20 ou du pied milieu 12 et destiné à recouvrir l'un ou l'autre de la porte 20 ou du pied milieu 12 comprend ladite cale 40.

De façon générale, un tel élément d'habillage 50 est destiné à améliorer l'esthétique et le confort du véhicule en habillant les parties apparentes à l'intérieur de l'habitacle.

Il présente une forme complémentaire de celle de la pièce qu'il habille.

L'élément d'habillage 50 est, de préférence, une garniture d'un encadrement de vitre de porte.

Selon une variante de réalisation, l'élément d'habillage 50 est une garniture intérieure de porte recouvrant depuis l'intérieur la doublure intérieure 24 de porte.

Dans un mode préféré de réalisation de la présente invention, la cale 40 est fixée sur l'élément d'habillage de la doublure intérieure 24 de porte désigné par la référence 51.

Grace à la présente invention, on s'affranchit de l'étape antérieure dans laquelle on fixait la cale 40 sur la doublure intérieure 24 de la porte 20.

La cale 40 arrivant pré-montée sur l'élément d'habillage 50 de la doublure intérieure 24 ou du pied milieu 12, le nombre de pièces constitutives de la structure de porte 10 à assembler est réduit.

Ceci offre l'avantage de réduire le temps de montage et les coûts notamment de production, de stockage ou d'approvisionnement de pièces le long de la ligne de production du véhicule.

Tel qu'illustré sur les figures 2a et 3, l'élément d'habillage 51 présente une forme complémentaire de celle de la doublure intérieure 24 de porte.

Plus précisément, c'est un profilé vertical creux de section en L dont la concavité est dirigée vers la doublure intérieure 24 de porte.

Les deux branches du L 52, 53 s'étendent dans deux plans perpendiculaires, respectivement parallèlement à la doublure intérieure 24 de porte 20 et au bord périphérique libre 25 du caisson 21.

La branche 53, s'étendant parallèlement au bord périphérique libre 25, est ainsi logée dans l'espace libre E entre la porte 20 et le pied milieu 12 en regard dudit bord.

Avantageusement, elle est adaptée pour former support à la cale 40.

Cette cale 40 est ainsi fixée par des moyens adaptés sur la face avant de ladite branche 53 dirigée vers le bord périphérique libre 25.

Il est à noter que la cale 40 peut aussi être venue de moulage avec l'élément d'habillage 51.

Dans le cas où la cale 40 est rapportée, elle peut être fixée sur la branche support 53 du profilé via tout moyen de fixation adapté. On peut citer, comme exemples non limitatifs de moyens de fixation, des moyens d'encliquetage, de collage, ou de vissage.

Concernant la cale 40, comme l'illustre les figures 2b et 3, elle est destinée à combler l'espace entre le bord périphérique libre 25 et la face avant du pied milieu 12.

Cette cale 40 comprend une platine 41 de section en forme de U destinée à prendre appui sur la face avant de la branche 53 de l'élément d'habillage 51 s'étendant selon la direction Y.

La concavité du U est tournée vers le bord périphérique libre 25 du caisson 21.

Dans cette concavité, est ménagé un réseau 42 de nervures de renfort de type quadrillage s'étendant selon les directions Y et Z.

De préférence, la barre de renfort 30 comprend une extrémité libre disposée sensiblement au droit de la cale 40.

De préférence, cette extrémité libre comprend un réseau de nervures de renfort de forme complémentaire au réseau 42 de nervures de la cale 40, ce qui garantit un emboîtement des réseaux l'un dans l'autre en cas de choc frontal.

La forme et les dimensions de la platine 41 sont adaptées pour occuper l'espace libre E en fonction des contraintes d'encombrement de cet espace définies notamment par rapport aux éléments d'habillage 50 de la doublure intérieure 24 et du pied milieu 12 ou encore au dispositif de fermeture de la porte 20 présents dans cet espace.

Par ailleurs, l'épaisseur de la platine 41 est fonction du jeu que l'on souhaite laissé entre les éléments pour garantir la montabilité et surtout la prestation.

D'autres variantes de réalisation peuvent être envisagées pour la cale 40.

Ainsi, la cale 40 peut être pleine ou creuse.

Dans un autre exemple non limitatif, la structure de la cale 40 peut être une mousse expansée.

Par ailleurs, la matière formant la cale 40 peut être, dans des exemples non limitatifs, un matériau métallique tel que l'acier, un matériau élastomère ou plastique, un matériau composite présentant des caractéristiques appropriées de résistance.

Une variante de réalisation de la présente invention peut prévoir que la cale 40 soit agencée sur l'élément d'habillage du pied milieu 12 en regard du bord périphérique libre 25 du caisson 21.

En cas de choc frontal, un effort de compression apparaît qui tend à rapprocher le montant avant du pied milieu 12 de la structure de véhicule 10.

La porte latérale avant 20 s'enfonce en direction du pied milieu 12 en se comprimant axialement selon la direction X.

La déformation de la porte est limitée, d'une part, par la barre de renfort 30 qui transmet les efforts du choc frontal vers le pied milieu 12 et, d'autre part, par la cale 40.

Les nervures 42 de cette dernière flambent c'est-à-dire qu'elles absorbent une partie de l'énergie du choc en se comprimant suivant la direction d'écrasement.

En devenant un point d'appui rigide, la cale 40 maîtrise le déplacement relatif entre la porte 20 et le pied milieu 12 et, en conséquence, participe à limiter la déformation de la structure de porte 10 lors d'un choc.

Ceci contribue à éviter l'ouverture de la porte 20 et à conserver l'intégrité de l'espace que forme l'habitacle du véhicule pour les passagers.

En rigidifiant la structure de véhicule 10, la cale 40 participe à la bonne tenue mécanique de la face latérale du véhicule et permet au véhicule de satisfaire à l'ensemble des tests réalisés pour la prestation concernant le choc frontal.

L'homme de l'art appréciera, par rapport aux véhicules de l'art antérieur, un véhicule offrant la possibilité de concilier les exigences relatives aux chocs frontaux et celles relatives à la maitrise de la productivité d'une ligne de production de véhicule.

Bien évidemment, l'invention ne se limite pas aux formes de réalisation de la structure de véhicule 10 décrites ci-dessus à titre d'exemples mais elle embrasse au contraire toutes les variantes possibles. Ainsi, dans une variante de réalisation, on peut prévoir qu'une telle structure de véhicule 10 soit utilisée pour une ou plusieurs des portes latérales d'un véhicule, que ce soit une porte avant ou une porte arrière.

De plus, la présente invention n'est pas limitée au mode de réalisation décrit comprenant une seule cale 40 par porte 20. Une variante de réalisation peut prévoir un élément d'habillage 50 conformé pour recevoir une série de cales 40.

## Revendications

1. Véhicule (10) comprenant une ouverture latérale (11) délimitée par un premier et un second montant (12), un ouvrant (20) mobile entre une position d'ouverture et une position de fermeture de ladite ouverture latérale (11), l'ouvrant (20) étant articulé sur le premier montant et verrouillable sur le second montant (12) en position fermée, un élément d'habillage (50) destiné à recouvrir un ouvrant (20) ou un montant (12) délimitant une ouverture latérale d'une structure de porte de véhicule, l'élément d'habillage comprenant une cale (40), l'élément d'habillage étant rapporté sur l'un ou sur l'autre de l'ouvrant (20) ou du second montant (12) pour le recouvrir, la cale (40) étant disposée dans l'espace libre défini entre l'ouvrant (20) et le second montant (12) lorsque ledit ouvrant (20) est fermé, **caractérisée en ce que** l'élément d'habillage (51) comprend un profilé comprenant une branche (53) s'étendant dans ledit espace libre, ladite branche (53) étant adaptée pour former support à la cale (40).

2. Véhicule selon la revendication 1 **caractérisé en ce que** la cale (40) peut être rapportée ou venue de moulage avec l'élément d'habillage (50).

3. Véhicule selon l'une des revendications 1 à 2, **caractérisé en ce que** la cale (40) est fixée par vissage, encliquetage ou collage sur l'élément d'habillage (50).

4. Véhicule selon l'une des revendications 1 à 3, **caractérisé en ce que** la cale (40) est une pièce dans laquelle est ménagée un réseau (42) de nervures de renfort.

5. Véhicule selon l'une des revendications 1 à 4, **caractérisée en ce que** l'élément d'habillage (51) présente une forme complémentaire à celle d'une doublure intérieure (24) de porte latérale.

6. Véhicule selon l'une des revendications 1 à 4, **caractérisée en ce que** l'élément d'habillage (50) présente une forme complémentaire à celle d'un pied milieu (12) délimitant l'ouverture latérale (11).

7. Véhicule selon l'une des revendications 1 à 6, **caractérisée en ce qu'**elle comprend, en outre, une barre de renfort (30) s'étendant le long de l'ouvrant (20), ladite cale (40) étant destinée à être disposée dans l'espace libre défini entre l'ouvrant (20) et le second montant (12) au niveau de ladite barre de renfort (30).

8. Véhicule selon la revendication 1 ou l'une quelconque des revendications 3 à 7, **caractérisé en ce que** la cale (40) comprend une platine (41) de section en forme de U destinée à prendre appui sur la face avant de la branche (53) de l'élément d'habitallge (51) s'étendant dans ledit espace libre.

9. Véhicule selon la revendication 8, **caractérisé en ce que** la concavité du U est tournée vers le bord périphérique libre (25) du caisson (21).

10. Véhicule selon la revendication 8 ou 9, **caractérisé en ce qu'**il comprend un réseau (42) de nervure de renfort de type quadrillage ménagé dans la concavité du U.

## Patentansprüche

1. Fahrzeug (10), das eine seitliche Öffnung (11) umfasst, die von einem ersten und einem zweiten Fuß (12) abgegrenzt ist, eine Tür (20), die zwischen einer Öffnungsposition und einer Schließposition der seitlichen Öffnung (11) beweglich ist, wobei die Tür (20) auf dem ersten Fuß angelenkt und auf dem zweiten Fuß (12) in geschlossener Position verriegelbar ist, ein Verkleidungselement (50), das dazu bestimmt ist, eine Tür (20) oder einen Fuß (12), der eine seitliche Öffnung eines Fahrzeugtüraufbaus abgrenzt, abzudecken, wobei das Verkleidungselement einen Keil (40) umfasst, wobei das Verkleidungselement entweder auf die Tür (20) oder den zweiten Fuß (12) angebaut ist, um sie/ihn abzudecken, wobei der Keil (40) in dem freien Raum angeordnet ist, der zwischen der Tür (20) und dem zweiten Fuß (12) definiert ist, wenn die Tür (20) geschlossen ist, **dadurch gekennzeichnet, dass** das Verkleidungselement (51) ein Profil umfasst, das einen Schenkel (53) aufweist, der sich in dem freien Raum erstreckt, wobei der Schenkel (53) angepasst ist, um für den Keil (40) einen Träger zu bilden.

2. Fahrzeug nach Anspruch 1, **dadurch gekennzeichnet, dass** der Keil (40) angebaut oder aus einem Formstück mit dem Verkleidungselement (50) sein kann.

3. Fahrzeug nach einem der Ansprüche 1 bis 2, **dadurch gekennzeichnet, dass** der Keil (40) durch Schrauben, Clipsen oder Kleben auf dem Verkleidungselement (50) befestigt ist.

4. Fahrzeug nach einem der Ansprüche 1 bis 3, **dadurch gekennzeichnet, dass** der Keil (40) ein Teil ist, in dem ein Verstärkungsrippennetz (42) eingerichtet ist.

5. Fahrzeug nach einem der Ansprüche 1 bis 4, **dadurch gekennzeichnet, dass** das Verkleidungselement (51) eine Form komplementär zu derjenigen einer Seitentür-Innenauskleidung (24) ist.

6. Fahrzeug nach einem der Ansprüche 1 bis 4, **dadurch gekennzeichnet, dass** das Verkleidungselement (50) eine Form komplementär zu derjenigen eines Mittenfußes (12), der die seitliche Öffnung (11) abgrenzt, aufweist.

7. Fahrzeug nach einem der Ansprüche 1 bis 6, **dadurch gekennzeichnet, dass** es außerdem eine Verstärkungsstange (30) umfasst, die sich entlang der Tür (20) erstreckt, wobei der Keil (40) dazu bestimmt ist, in dem freien Raum, der zwischen der Tür (20) und dem zweiten Fuß (12) im Bereich der Verstärkungsstange (30) definiert ist, angeordnet zu sein.

8. Fahrzeug nach Anspruch 1 oder nach einem der Ansprüche 3 bis 7, **dadurch gekennzeichnet, dass** der Keil (40) eine Platte (41) mit Querschnitt in U-Form umfasst, die dazu bestimmt ist, sich auf die Vorderseite des Schenkels (53) des Verkleidungselements (51), das sich in dem freien Raum erstreckt, zu legen.

9. Fahrzeug nach Anspruch 8, **dadurch gekennzeichnet, dass** die Konkavität des U zu dem umfänglichen freien Rand (25) des Fahrzeugkastens (21) gerichtet ist.

10. Fahrzeug nach Anspruch 8 oder 9, **dadurch gekennzeichnet, dass** es ein Verstärkungsrippennetz (42) des Typs Gitternetz, das in der Konkavität des U eingerichtet ist, umfasst.

## Claims

1. A vehicle (10) including a lateral opening (11) delimited by a first and a second pillar (12), an opening panel (20) movable between an opening position and a closure position of the said lateral opening (11), the opening panel (20) being articulated on the first pillar and lockable on the second pillar (12) in closed position, a trim element (50) intended to cover an opening panel (20) or a pillar (12) delimiting a lateral opening of a vehicle door structure, the trim element including a wedge (40), the trim element being added on one or other of the opening panel (20) or of the second pillar (12) to cover it, the wedge (40) being disposed in the free space defined between the opening panel (20) and the second pillar (12) when the said opening panel (20) is closed, **characterized in that** the trim element (51) includes a profile including a branch (53) extending in the said free space, the said branch (53) being adapted to form a support to the wedge (40).

2. The vehicle according to Claim 1, **characterized in that** the wedge (40) can be added or moulded with the trim element (50).

3. The vehicle according to one of Claims 1 to 2, **characterized in that** the wedge (40) is fixed by screwing, snapping or adhesive bonding on the trim element (50).

4. The vehicle according to one of Claims 1 to 3, **characterized in that** the wedge (40) is a piece in which a network (42) of reinforcement ribs is arranged.

5. The vehicle according to one of Claims 1 to 4, **characterized in that** the trim element (51) has a shape complementary to that of a side door interior lining (24).

6. The vehicle according to one of Claims 1 to 4, **characterized in that** the trim element (50) has a shape complementary to that of a centre pillar (12) delimiting the lateral opening (11).

7. The vehicle according to one of Claims 1 to 6, **characterized in that** it includes, furthermore, a reinforcement bar (30) extending along the opening panel (20), the said wedge (40) being intended to be disposed in the free space defined between the opening panel (20) and the second pillar (12) at the level of the said reinforcement bar (30).

8. The vehicle according to Claim 1 or any one of Claims 3 to 7, **characterized in that** the wedge (40) includes a plate (41) of U-shaped cross-section, intended to rest on the front face of the branch (53) of the trim element (51) extending in the said free space.

9. The vehicle according to Claim 8, **characterized in that** the concavity of the U is turned towards the free peripheral edge (25) of the panel (21).

10. The vehicle according to Claim 8 or 9, **characterized in that** it includes a network (42) of reinforcement ribs of the grid type, arranged in the concavity of the U.
